# EUROPEAN PATENT SPECIFICATION

(11) **EP 2 399 080 B1**
(45) Date of publication and mention of the grant of the patent: **27.11.2013**
(21) Application number: 10706766.2
(22) Date of filing: 15.01.2010
(51) Int. Cl.: F24F 5/00, F24D 3/14, F24D 3/16

(54) **PREFABRICATED COMPOSITE PANEL FOR THE FITTING OF AIR-CONDITIONING PLANTS OF BUILDINGS ROOMS**
VORGEFERTIGTE VERBUNDPLATTE ZUM ANBRINGEN VON KLIMAANLAGEN VON GEBÄUDERÄUMEN
PANNEAU COMPOSITE PRÉFABRIQUÉ POUR LE MONTAGE D'INSTALLATIONS DE CLIMATISATION DANS DES PIÈCES DE CONSTRUCTIONS

(30) Priority: 29.01.2009 IT VI20090014
(43) Date of publication of application: 28.12.2011
(73) Proprietor: Winvent s.r.l., 24126 Bergamo (IT)
(72) Inventor: D'AMICO, Piermatteo, 25018 Montichiari (BS) (IT); PIOVAN, Filippo, 36100 Vincenza (IT)
(74) Representative: Burchielli, Riccardo
(86) International application number: PCT/IT2010/000007
(87) International publication number: WO 2010/086886

(56) References cited:
- EP-A- 1 512 915
- DE-A1- 10 019 315
- DE-U1- 20 219 266
- DE-U1-202004 002 089
- GB-A- 1 588 279

## Description

The present invention relates to a prefabricated composite panel for the fitting of air-conditioning plants of buildings rooms, in particular yet existing or pre-established civil, industrial, handicraft or trade use buildings.

At pure way of example, factories, warehouses for storing goods, shopping centres, theatres, cinemas, hospitals, schools or other utilities of the public authority and so on belong to the aforesaid category of buildings.

It is known that several types of radiant type plants for air-conditioning (heating and cooling) rooms of buildings, such as industrial or handicraft factories, schools, hospitals or the like, exist on the market.

These plants can be installed either on walls, floors and/or ceilings of the room.

Document EP1512915 A discloses an example of a radiant panel of the prior art that can be used for heating and/or colling a building.

More recently, in order to get the air conditioning of rooms exclusively of dwellings, especially yet existing, plasterboard panels have been offered on the market, normally used to compose false ceilings and partitions, provided with radiant tubular elements inside which a fluid, for example water, is conveyed and flows.

It is well known that radiant air-conditioning systems result in an excellent room comfort, usually greater than that one created by conventional air-conditioning systems, and thus they give rise to growing interest in the market.

More specifically, the technology based on radiant elements is suitable to be used where the "bio-air-conditioning" or natural air-conditioning is foreseen, which is based on renewable energy sources in order to produce the energy needed to heat or cool the room.

Just to mention the main ones, the renewable sources are the sun, in which case the air-conditioning is based on active systems, such as photovoltaic panels or solar panels, or on passive systems, such as greenhouses and accumulation walls, as well as the wind, the water resources, the geothermal resources and the tides.

Within the air-conditioning of buildings rooms, radiant systems, powered for example by solar, wind or geothermal energy, allow to largely reduce energy consumption.

However, as currently conceived both for constructive forms and installation mode, these systems are suitable only for new constructions and their future developments.

At present, the problem of how to properly and effectively reduce energy consumption in yet existing buildings, providing them with a natural air-conditioning plant or converting to renewable energies the current air-conditioning plant entirely powered by non-renewable resources, such as fossil fuel for heating and electricity to cool and ventilate the room, still remains.

Indeed, the operations carried out to install in a building already built and in use a plant with natural air-conditioning, at low energy consumption, or converting the existing artificial air-conditioning plant to a natural air-conditioning plant present the drawback of being quite invasive.

In practice, these operations involve the substantial dismantling of the interior of the building, making it uninhabitable for rather long times, even 4÷5 months in the most critical cases, with all the disadvantages and discomforts that follow.

In this regard, it is considered, for example, the situation of a factory: the techniques currently used to move from an artificial air-conditioning to a natural air-conditioning require disassembly and temporary removal of equipment, shelving, cabinet benches and so on, causing production shutdown.

Conversion of the air-conditioning plant for a building already built and in use includes, moreover, cleaning workings of the floor of the building itself, as well as construction of another cement substrate above the old one, of a thickness equal to 20÷25 cm, in order to allow to apply the radiant pipes of the new air-conditioning plant.

A second drawback related to the installation of an air-conditioning plant of the radiant type in a yet existing building following the principles of the known art is represented by the fact that the heat efficiency achieved by the new plant system are quite low.

The heat loss caused by the substrate is high and this, even considering that the levels of energy got from renewable sources are inevitably inferior than those ones provided by artificial sources, causes in the room insufficient thermal performances and inability to fully exploit the amount of energy recovered through the natural resources.

This issue depends primarily on two factors: the first one is given by the relevant thickness of the substrate added to the yet existing floor, the second one by the distance between the pattering plane and the radiant pipes, as known about 12÷13 cm.

The present invention aims to overcome the drawbacks of the known technique just complained.

In particular, main purpose of the present invention is to make available a prefabricated composite panel for the fitting of air-conditioning plants of buildings rooms, as well as to implement a process using said composite panel, which allow to provide a building already in use, or in any case completed from the general plant level, with an air-conditioning plant, especially natural and powered by renewable energies, faster and more conveniently than the known art.

In other words, primary purpose of the invention is to provide a prefabricated composite panel and a process for the fitting of air-conditioning plants of buildings rooms which, compared to the known processes, simplify the conversion to an air-conditioning of the buildings themselves based on renewable energy sources.

Within such purposes, it is task of the present invention to develop a prefabricated composite panel and a process for the fitting of air-conditioning plants of buildings rooms which are installed the first and feasible the second without removing or dismantling the equipment provided in the building.

It is another task of the invention to provide a prefabricated composite panel and a process which, with respect to the known technique, avoid making the rooms uninhabitable to people or, however, if this is unavoidable, reduce times of unfitness for use of the rooms of a building during the installation inside them of an air-conditioning plant.

Said purposes are achieved by a prefabricated composite panel for the fitting of air-conditioning plants of buildings rooms as claim 1, to which they refer for sake of brevity.

Other features of detail of the prefabricated composite panel of the invention are set forth in the dependent claims.

Integral part of the present invention is also a covering module for the fitting of air-conditioning plants of buildings rooms according to claim 12, to which they refer for sake of simplicity.

Object of the present invention is also a process for the fitting of air-conditioning plants of buildings rooms, using the aforesaid prefabricated composite panel, according to the correspondent main claim, numbered with 13, to which they still relates for ease of exposition.

Further applicative details of the process of the invention are highlighted in the corresponding dependent claims.

Advantageously, the process of the invention allows to provide a building already built and/or in use with an air-conditioning plant, in particular if powered by renewable energies, in faster times and less laborious ways than the known technique.

Still advantageously, the process according to the invention is less invasive to be implemented than equivalent processes of the known type.

The installation of one or more prefabricated composite panels in the chosen building room according to the dictates of the present invention occurs; in fact, in most cases without the necessity to remove or move the equipment, furniture, machinery or other objects present therein, then having to relocate them again.

At the most, it is necessary to remove the objects from the rooms in which the installation of air-conditioning plant occurs for a period of time which, depending on the dimensions of the rooms themselves, is included between 2 and 7 days and is therefore rather lower than time nowadays required in such cases, greater at least to one month.

The peculiarity of the invention is even greater when the process is implemented in rooms in which a certain operative continuity is required, such as in manufacturing plants, or there is the constant presence of a significant number of people, such as hospitals, commercial centres or in any other high attending compass.

Equally advantageously, the invention gets a pattering plane with high mechanical strength which is determined both by the constructive composition proper of the prefabricated composite panel here claimed and the pre-existing floor below.

Therefore, when the prefabricated composite panel of the invention is applied on the floor of a building already in use, an optimal carriage of the pattering plane is achieved.

In this case, both the support structure, typically but not exclusively a reinforcement net, and the hydraulic distribution plant of the air-conditioning fluid, integrated and monolithic to the support structure itself, result in a significant mechanical strength.

In particular, the laminar support structure is able to spread evenly and uniformly the loads applied to it, thanks in part to the geometry and in part to the type of material with which it is constructed.

In advantageous manner, in addition, the prefabricated composite panel of the invention allows a significant and effective heat redevelopment of the building in which it is installed, even in more models in series, for the fitting of an air-conditioning plant.

The prefabricated composite panel of the invention and the process which exploits it are suitable also to be advantageously used in a wide range of civil buildings already erected and/or in use such as cinemas, museums, theatres, hotels, industrial or handicraft factories, airports, warehouses of goods storage, schools, institutes of the public authority, hospitals, shopping or exhibition centres and so on.

Said purposes and advantages, as well as others that will emerge later on, will appear to a greater extent from the following description relating to a preferred embodiment of the prefabricated composite panel for the fitting of air-conditioning plants of buildings rooms of the invention, given by illustrative and indicative, but not limiting, way with the help of the attached drawings where:
figure 1 is a top view of the prefabricated composite panel of the invention;
figure 2 is an executive variant of the prefabricated composite panel of figure 1;
figure 3 is a top view of a first detail of figure 2;
figure 4 is a top view of a second detail of figure 1.

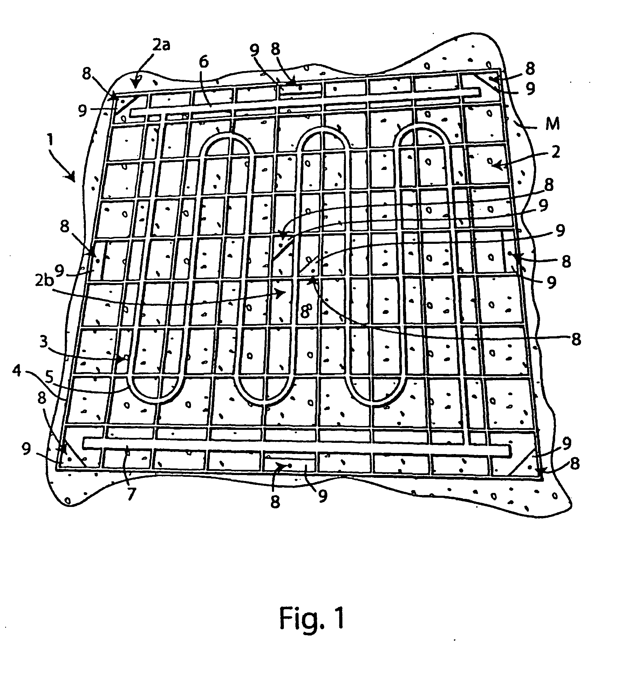

The prefabricated composite panel for the fitting of air-conditioning plants of buildings rooms is shown in detail in figure 1 where it's globally numbered with 1.

In accordance with the invention, the prefabricated composite panel 1 comprises a laminar support structure, overall indicated with 2, suitable to be arranged close to an existing reference surface M of the room, and a hydraulic distribution system, as a whole indicated with 3, integrated into the laminar support structure 2, suitable to be connected with a fluid distribution network, not shown, in order to be run through by the fluid and thus air-condition the room.

In the specific case, the existing reference surface M of the room consists of, for example, the floor of a industrial plant.

In a preferred but not exclusive way, the laminar support structure 2 includes a flat framework net 4, composed by longitudinal bars intertwined one with each other, each of which presents in cross section a polygonal profile, for example rectangular.

At purely preferential title, the framework net 4 develops in this case according to a square profile, having for instance sizes of 1 m x 1 m; other embodiments will exist in which the framework net develops according to a profile which, although still polygonal, is rectangular, having for instance sizes equal to 1 m x 0.5 m.

Advantageously, the laminar support structure 2 and the hydraulic distribution system 3 are made of plastic material with high mechanical strength.

Preferably, such a plastic material includes any composite thermoplastic polymer selected from the group consisting of polypropylene (PP), polyethylene (PE) and the like.

In particular, the hydraulic distribution system 3 is monolithic, made of one single body, with the laminar support structure 2 through industrial processing of plastic material, such as injection moulding, blow moulding (which allows greater water seal) or extrusion plastic material precisely.

In further embodiments of the invention, not represented, the hydraulic distribution system may be composed of one or more separate components, made of recycled rubber or aluminium, which are integrated into the laminar support structure during and due to the effect of the industrial processing of the plastic material with which the support structure itself is produced.

The constructive solution in recycled rubber of the hydraulic distribution system allows greater flexibility in production phase, as well as to develop the prefabricated composite panel according to dimensions extending to dozens and dozens of meters.

The constructive solution in aluminium of the hydraulic distribution system allows, instead, to achieve higher thermal conductivity values.

According to the preferred embodiment described herein of the invention, the hydraulic distribution system 3 comprises a tubular heating coil 5, uniformly distributed within the laminar support structure 2, a delivery pipe 6 and a return pipe 7 connected from opposite sides with the tubular coil 5.

The delivery pipe 6 and the return pipe 7, suitable to be hydraulically connected with the distribution network of the fluid previously introduced, are positioned near the perimetrical edge 2a of the laminar support structure 2.

More precisely, in this case the delivery pipe 6 is run through by hot heating water, while the return pipe 7 receives cold water.

Advantageously, the tubular heating coil 5 presents in cross section a polygonal outer profile and a curved inner profile.

On one hand, the polygonal outer profile of the hydraulic system 3 determines the possibility to limit the thickness of a component, the hydraulic system 3 precisely, which at the current state of the art of the field here involved presents a greater thickness and, therefore, implies higher costs and overall dimensions.

On the other, the curved inner profile implies a load-bearing capacity or mechanical strength rather relevant for the hydraulic system 3, comparable to that one of the equivalent systems of the known type having, however, a circular profile as mentioned.

Preferably but not necessarily, the prefabricated composite panel 1 includes anchorage means, not shown for sake of expositive simplicity, applied to the laminar support structure 2 in order to firmly secure it to the reference surface M.

The anchorage means comprise a plurality of metallic dowels suitable to be thrust into the reference surface M and inserted by pressure into through holes 8 made in thickened plaques 9 belonging to the support structure 2 and located in the central zone 2b and near the perimetrical edge 2a of the support structure 2.

In other embodiments of the invention, the anchorage means can be clearly placed only at the central area, only at the perimetrical edge or at other further and different predetermined portions of the support structure.

In convenient way, the thickened plaques 9 of the laminar support structure 2 include a reinforcement foil, not visible and made of metallic material, suitable to increase the structural strength of such thickened plaques 9 and thus avoid risks of breakage of the support structure 2 during the application of the anchorage means.

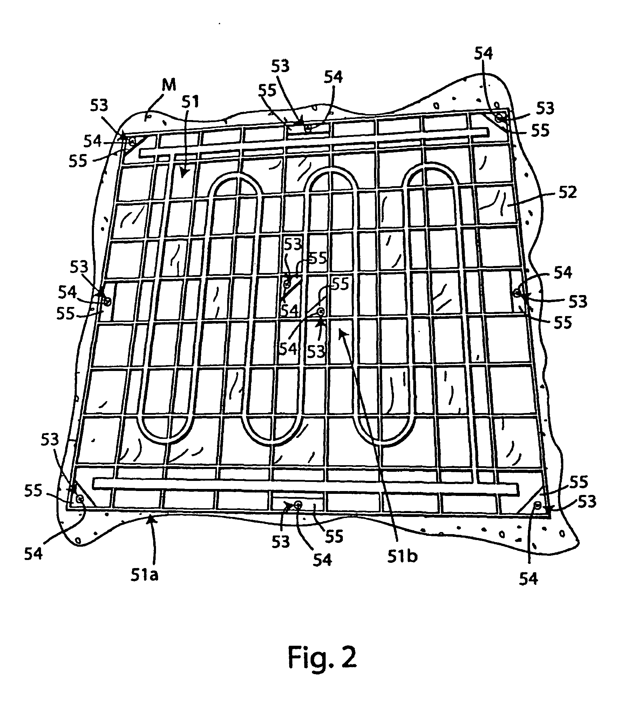

Figure 2 shows a first executive variant of the invention in which the prefabricated composite panel, now generally numbered with 50, differs from that one just described and illustrated in figure 1 for the fact of comprising an insulator mat 52, coupled with the lateral surface of the support structure 51 through fastening means, overall indicated with 53.

In practice, the insulator mat 52 is arranged with the lower surface close to the existing reference surface M.

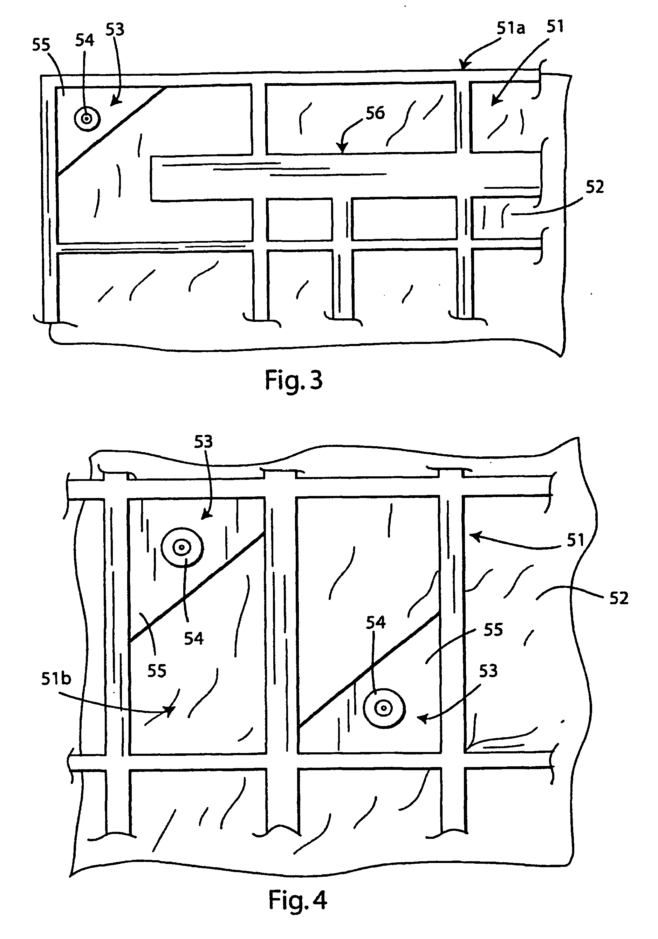

More in detail, as it can better observed in figures 3 and 4, the fastening means 53 comprise a plurality of nails 54 made of rubber suitable to be thrust into the reference surface M and inserted into through holes, not shown, made in the thickened plaques 55 belonging to the support structure 51 and placed in the central area 51 b and near the perimetrical edge of the support structure 51.

Therefore, in this case the fastening means 53 also operate as anchor means for the prefabricated composite panel 50.

The insulator mat 52 presents a thickness of 3.5 mm and is made of milled and compressed rubber, recycled from the tires.

In conclusion, therefore, the prefabricated composite panel 50 presents a thickness extremely reduced, equal to a total of 7 mm, determined by the sum of the thickness of the laminar support structure 51 and the insulator mat 52.

The insulator mat 52 gives to the composite panel 50 deadening properties which make it suitable to be used in particular in civil compass, for example hotels, hospitals, museums, libraries, exhibition halls, shopping centres and more.

In this regard, the fastening of the insulator mat 52 to the reference surface M through the nails made of rubber 54 occurs in order to prevent the propagation of noise from the pattering plane to the people.

The prefabricated composite panel 50 also may be advantageously placed in simple support to the reference surface M of the building room, without the need to be anchored to the reference surface M using dowels or nails of any kind.

As yet said, part of the invention is also a covering module, not shown in the appended drawings, suitable to the fitting of air-conditioning plants of buildings rooms.

According to the invention, the covering module includes:
a plurality of prefabricated composite panels 1 or 50, each of which includes the laminar support structure 2 or 51 which is arranged close to the reference surface M of the room, and the hydraulic distribution system 3 or 56, integrated into the laminar support structure 2 or 51, suitable to be connected with the fluid distribution network in order to be run through by the fluid itself and air-conditioning the room;
a surface finishing, not shown, applied above the entire lateral face of the laminar support structure 2 or 51.

The surface finishing includes for example a layer of cement mortar or levelling with high density and smoothness, having for example a thickness of about 8 mm: such a mortar is provided with mechanical strength, abrasion resistance and heat capacity.

It is understood that in other embodiments of the invention the covering module might include a surface finishing different from a cement mortar, however represented by any of the coverings selected from the group consisting of tiles, laminar sheets of coverage and the like.

In addition, there will be other embodiments of the invention in which the covering module includes a single prefabricated composite panel, made in proper dimensions, especially when the building room to be equipped with the air-conditioning plant has limited dimensions.

Furthermore, in such case, the prefabricated composite panel may include one or more laminar support structures and, consequently, one or more hydraulic distribution systems connected in series each other.

Moreover, other embodiments of the invention may provide that the covering module comprises a plurality of surface finishings associated, depending on the cases, with one or more prefabricated composite panels of the type indicated with 1 or 50.

The process for the fitting of an air-conditioning plant of a room of a building, such as a factory already in use, is object of the present invention.

According to the invention, the process comprises in succession the following operations:
applying to a free area of the existing reference surface M of the room a plurality of prefabricated composite panels 1 or 50, each of which including a laminar support structure 2 or 51, suitable to be arranged close to the reference surface M of the room, and a hydraulic distribution system 3 or 56, integrated into the laminar support structure 2 or 51, suitable to be connected with the fluid distribution network in order to be run through by the fluid itself and thus air-condition the room;
connecting the hydraulic distribution system 3 or 56 of each of the prefabricated composite panels 1 or 50 with the distribution network of the fluid.

Preferably but not exclusively, the process of the invention initially includes the operation of reclaiming and cleaning the surface level of the existing reference surface M, performed by the operator using a special machine before the operation of applying the prefabricated composite panels 1 or 50 to the reference surface M.

The operation of reclaiming and cleaning gives hygiene to the reference surface M, preparing it for the subsequent operations of the process.

The operation of applying each of the prefabricated composite panels 1 or 50 occurs in-situ, directly into the building room without removing equipment, machinery, furniture, shelving or anything else possibly yet present in the room.

According to the preferred application here describe of the process of the invention, the operation of applying the prefabricated composite panels 1 or 50 comprises in the order the following operations:
laying down each of the prefabricated composite panels 1 or 50 on the free area of the reference surface M;
arranging a surface finishing, not shown, on each of the prefabricated composite panels 1 or 50 in order to get the aforesaid covering module which represents the actual pattering plane.

In a preferred manner, the process of the invention may include the operation of anchoring each prefabricated composite panel 1 or 50 to the reference surface M, performed before the operation of arranging the surface finishing on the prefabricated composite panels 1 or 50 themselves.

The operation of anchoring the prefabricated composite panel 1 consists in thrusting into the reference surface M a plurality of metallic dowels inserted into through holes 8 preliminarily made in thickened plaques 9 of the laminar support structure 2: such a mode of anchoring is particularly suitable for the industrial field.

The process of anchoring the prefabricated composite panel 50 consists, instead, in thrusting into the reference surface M a plurality of nails made of rubber 54 preliminarily inserted into through holes made in thickened plaques 55 of the laminar support structure 51: such an anchoring system is suitable for the civil field.

The anchoring of each prefabricated composite panel 1 or 50 to the existing reference surface M includes also the laying off of an insulating cohesion resin on the reference surface M itself.

Such an insulating cohesion resin is also known in the building field as stabilizing primer.

The process of laying off the insulating resin occurs before the operation of thrusting the metallic dowels into the reference surface M.

In such cases, the anchoring of the prefabricated composite panels 1 or 50 to the reference surface M will still be predominantly mechanical rather than chemical: the application of the cohesion resin contributes, indeed, to a small percentage, on the order of 5%, to the overall seal.

This assures excellent stability to the coupling of the prefabricated composite panels 1 or 50 with the existing reference surface M.

The operation of arranging a surface finishing on the prefabricated composite panels 1 or 50 consists, for example, in a cast of the cement mortar or levelling with high density and smoothness, having a thickness of 8 mm, previously cited.

In particular, cast of the cement mortar occurs without interruption on the prefabricated composite panels 1 or 50 in order to obtain a single, uniform pattering plane in the room.

Thus, the final covering module presents advantageously a thickness of 11.5 mm or 15 mm, depending on whether it includes prefabricated composite panels 1 or prefabricated composite panels 50 including the insulator mat 52.

In any case, the thickness of the covering module is significantly lower than the usual thickness of 200 mm of the coating substrate obtained through the known processes during interventions of conversion from an artificial to a natural air-conditioning of an air-conditioning plant installed in a building yet in use.

Reducing the thickness of the covering module allows to exploit to an extent greater than the known art the energy derived from renewable resources since it implies a lower heat loss, without impacting negatively on the mechanical features and the carriage of the covering module.

In order to heat the room to an extent equivalent to the known technique, therefore, temperatures somewhat lower than those ones required by 20 cm substrates are required: for example, water may take the values of 22-25°C in order to heat efficiently the room, against the values of 30-35°C currently required for the presence of a thickened coating substrate.

Similar reasoning applies to the cooling, with the water that even at values of 14-16°C can effectively cool the room, against the values of 12-13°C necessary nowadays.

In addition to the benefits in terms of thermal efficiency, the delivered power being equal, the benefits in terms of energy savings determined by the invention are, therefore, quite evident.

The thermal energy produced by the air-conditioning plant exploiting the prefabricated composite panel 1 or 50 installed according to the process of the invention is higher than that one actually needed to achieve comfortable room conditions: the excess part of the energy produced can be so advantageously sold to other entities or associations concerned, with the proceeds that this entails.

Due to the limited thickness, the covering module has also a minimal thermal inertia and in any case lower than the substrates made with the current technologies.

This aspect implies the further advantage of allowing the shutdown of the plant at times when it is necessary to air-condition the room, such as at night, at closure hours or days and the like.

Unlike the known type plants installed in buildings yet previously used, when switching on the air-conditioning plant which uses the prefabricated composite panel 1 or 50 of the invention determines immediately in the room the desired temperature conditions, with consequent greater comfort for people.

In addition, the thickness of the surface finishing cast in-situ allows to meet the necessity to perform the intervention in the building without removing physical obstructions provided in the room.

This requirement cannot in any way be satisfied with the laying of a substrate of 20 mm since this thickness would make nearly impossible inspection, maintenance, repair or replacement of inner parts of an air-conditioning plant of the radiant-mass type, which exploits particularly the renewable energy resources.

By means of the operative solutions set by the invention, the heat flux produced by radiant tubular coil 5 has to pass through thicknesses somewhat reduced, with the obvious advantages, already mentioned above, that this involves compared to the prior art.

In other applicative embodiments of the invention, not accompanied by explanatory drawings, instead of a cast of cement mortar, the process of the invention may provide for the application, for example by gluing, of one or more coating tiles having a thickness between 8 mm and 10 mm, on each of the composite panels 1 or 50.

In such case, therefore, a finished covering module of thickness between 11.5 mm and 17 mm is obtained, which allows to achieve significant benefits in the laying phase since it avoids the removal of the frame which delimits the compartment of a door already installed in a room of a building.

The gluing of the coating tiles to the prefabricated composite panels 1 or 50 of the type described above will occur using for example elastomeric (polyurethane or epoxy) adhesives.

Furthermore, in this operating mode, the process of the invention includes the operation of sealing with elastic interposition products the perimeter of the pattering plane obtained with the coating tiles yet applied to the prefabricated composite panels 1 or 50.

This allows to get pattering planes immediately feasible by people after laying, reducing to a few hours the unfitness for use of the room and creating on a radiant floor air-conditioning plant a coating system which, although comprising rigid elements, produces a continuous surface, elastic enough to absorb the thermal expansions.

In convenient way, the process of the invention includes the operation of delimiting the space of the free area of the room affected by the operation of arranging the surface finishing on the prefabricated composite panels 1 or 50.

Such an operation of delimiting is performed before arranging the surface finishing to cover the prefabricated composite panels 1 or 50 and, if appropriate, after having anchored to the reference surface M the support structure 2 or 51 of each of these prefabricated panels 1 or 50.

The operation of delimiting consists in positioning at approximately 2÷3 cm from the physical obstructions, such as machinery present in the room, a series of spacing elements, not visible, which prevent contact between the physical obstructions themselves and the material used to provide the surface finishing.

Simultaneously with the delimitation of the space for the cast, the spacing elements determine the level which can be reached by the material of the surface finishing and, consequently, the thickness of the covering module or pattering plane.

Each of the spacing elements may include a reference bracket fixed to the reference surface M and provided with an arm protruding in direction orthogonal to the reference surface M.

Based on the foregoing, it is understood, therefore, that the prefabricated composite panel for the fitting of air-conditioning plants of buildings rooms and the process using such a panel, both object of the present invention, achieve the purposes and reach the advantages already mentioned.

In execution phase, changes can be made to the prefabricated composite panel of the invention consisting, for example, in a composition of the hydraulic distribution system different from that one first described.

Furthermore, there will be applicative variants of the process in which the covering module are applied only to a free part of one or more of the reference surfaces present in the room of a building, which does not affect the advantage brought by the invention.

In addition, the modules applied to the existing reference surface can be in any number starting from one, regardless the process with which they are obtained and shaped.

It is stated precisely that the process according to the invention can be applied to any bearing reference surface of a room of a building yet built or in use, thus not only to a floor, as already indicated, but also to a side wall, a ceiling or a false ceiling of a given room.

Finally, the pattering plane obtained by the process of the invention may be subjected to surface finishing workings, such as colour painting or gluing on it another coating having better aesthetic appeal, preferably of reduced thickness, such as a linoleum or polyvinylchloride (PVC) or any other suitable material sheet.

The composite panel of the invention, although being described with particular reference to air-conditioning plants which exploit renewable energy sources, can be advantageously used in traditional air-conditioning plants as well: reducing, as seen, the radiant masses, the air-conditioning plant obtained through one or more composite panels according to the invention lowers the temperatures and limits the operating hours of the heating systems necessary to keep adequate and comfortable conditions inside the room of a building to be heated.

It is, finally, clear that numerous other variations may be made to the prefabricated composite panel in question, without for this reason going out of the novelty principles inherent to the inventive idea yet expressed, as it is clear that, in the practical implementation of the invention, materials, shapes and sizes of the illustrated details can be any, as needed, and may be replaced with others technically equivalent.

## Claims

1. Prefabricated composite panel (1; 50) for the fitting of air-conditioning plants of buildings rooms comprising at least one laminar support structure (2; 51), suitable to be arranged close to an existing reference surface (M) of said room, and at least one hydraulic distribution system (3; 56), **characterized in that** said at least one hydraulic distribution system (3; 56) is monolithic with said at least one laminar support structure (2; 51), suitable to be connected with a fluid distribution network in order to be run through by said fluid and air-condition said room.

2. Panel (1; 50) as claim 1) **characterized in that** said at least one laminar support structure (2, 51) includes a flat framework net (4) composed by longitudinal bars intertwined one with each other, each of which presents in cross section a polygonal profile.

3. Panel (1; 50) as claim 1) or 2) **characterized in that** said at least one laminar support structure (2; 51) is made of plastic material with high mechanical strength.

4. Panel (1; 50) as claim 3) **characterized in that** said at least one hydraulic distribution system (3; 56) is made of plastic material and is integrated into said at least one laminar support structure (2; 51) through industrial processing of said plastic material resulting monolithic, single body with said at least one laminar support structure (2; 51).

5. Panel (1; 50) as any of the previous claims **characterized in that** said at least one hydraulic distribution system (3; 56) comprises a tubular heating coil (5), uniformly distributed within said at least one laminar support structure (2; 51), a delivery pipe (6) and a return pipe (7) connected from opposite sides with said tubular coil (5) and positioned near the perimetrical edge (2a) of said at least one support structure (2), suitable to be hydraulically connected with said fluid distribution network.

6. Panel (1; 50) as claim 5) **characterized in that** said tubular coil (5) presents in cross section a polygonal outer profile and a curved inner profile.

7. Panel (50) as any of the previous claims **characterized in that** it includes an insulator mat (52), coupled with the lateral face of said at least one laminar support structure (51) through fastening means (53) and suitable to be arranged close to said existing reference surface (M).

8. Panel (50) as claim 7) **characterized in that** said insulator mat (52) presents a thickness of 3.5 mm and is made of milled and compressed rubber recycled from tires.

9. Panel (1) as any of the previous claims **characterized in that** it comprises anchorage means (53) applied to said at least one support structure (2) in order to firmly secure it to said reference surface (M).

10. Panel (1) as claim 9) **characterized in that** said anchorage means include a plurality of dowels, suitable to be thrust into said reference surface (M), inserted into through holes (8) made in thickened plaques (9) belonging to said at least one support structure (2) and located in the central zone and/or near the perimetrical edge (2a) of said at least one support structure (2).

11. Covering module for the fitting of air-conditioning plants of buildings rooms **characterized in that** it comprises:
one or more prefabricated composite panels (1; 50) according to claim 1;
at least one surface finishing applied above the entire lateral face of said at least one support structure (2; 51).

12. Process for the fitting of air-conditioning plants of buildings rooms comprising the following operations:
applying to a free area of at least one existing reference surface (M) of said room one or more prefabricated composite panels (1; 50), each of which including at least one laminar support structure (2; 51), suitable to be arranged close to said at least one existing reference surface (M) of said room, and at least one hydraulic distribution system (3; 56), monolithic with said at least one laminar support structure (2; 51), suitable to be connected with a fluid distribution network in order to be run through by said fluid and air-condition said room;
connecting said at least one hydraulic distribution system (3; 56) of each of said prefabricated composite panels (1; 50) with said distribution network of said fluid.

13. Process as claim 12) **characterized in that** said operation of applying each of said prefabricated composite panels (1; 50) occurs directly in said room and includes in the order the following operations:
laying down each of said prefabricated composite panels (1; 50) on said free area of said at least one reference surface (M);
arranging at least one surface finishing on each of said prefabtricated composite panels (1; 50).

14. Process as claim 13) **characterized in that** said surface finishing comprises any of the coverings chosen by the group consisting of tiles, laminar coating sheets, cement mortar layer.

15. Process as claim 13) or 14) **characterized in that** it comprises the operation of delimiting the space of said room affected by said operation of arranging said surface finishing, carried out before arranging said surface finishing on said prefabricated composite panels (1; 50).

## Patentansprüche

1. Vorgefertigte Verbundplatte (1; 50) zum Anbringen von Klimaanlagen von Gebäuderäumen, umfassend zumindest eine laminare Stützstruktur (2; 51), die geeignet ist, um nahe an einer vorhandenen Referenzfläche (M) des Raumes angeordnet zu werden, und zumindest ein hydraulisches Verteilungssystem (3; 56), **dadurch gekennzeichnet, dass** das zumindest eine hydraulische Verteilungssystem (3; 56) monolithisch mit der zumindest einen laminaren Stützstruktur (2; 51) ist, und geeignet ausgebildet ist, um mit einem Fluid-Verteilungsnetzwerk verbunden zu werden, um von dem Fluid durchlaufen zu werden und den Raum zu klimatisieren.

2. Platte (1; 50) nach Anspruch 1), **dadurch gekennzeichnet, dass** die zumindest eine laminare Stützstruktur (2, 51) ein flaches Rahmengestell-Netz (4) enthält, das aus miteinander verflochtenen Längssprossen gebildet ist, von denen jede im Schnitt ein vieleckiges Profil aufweist.

3. Platte (1; 50) nach Anspruch 1) oder 2), **dadurch gekennzeichnet, dass** die zumindest eine laminare Stützstruktur (2; 51) aus einem Plastikmaterial mit hoher mechanischer Stärke hergestellt ist.

4. Platte (1; 50) nach Anspruch 3), **dadurch gekennzeichnet, dass** das zumindest eine hydraulische Verteilungssystem (3; 56) aus einem Plastikmaterial hergestellt ist und in die zumindest eine laminare Stützstruktur (2; 51) integriert ist durch industrielles Verarbeiten des aus dem Plastikmaterial entstehenden monolithischen, einteiligen Körpers mit der zumindest einen laminaren Stützstruktur (2; 51).

5. Platte (1; 50) nach einem der vorhergehenden Ansprüche, **dadurch gekennzeichnet, dass** das zumindest eine hydraulische Verteilungssystem (3; 56) umfasst: eine röhrenförmige Heizspule (5), die gleichmäßig innerhalb der zumindest einen laminaren Stützstruktur (2; 51) verteilt ist, ein Ablaufrohr (6) und eine Rücklaufleitung (7), die von entgegengesetzten Seiten mit der röhrenförmigen Spule (5) verbunden sind und nahe der Umlaufkante (2a) der zumindest einen Stützstruktur (2) positioniert sind, und geeignet ausgebildet sind, um hydraulisch mit dem zumindest einem Fluid-Verteilungsnetzwerk verbunden zu werden.

6. Platte (1; 50) nach Anspruch 5), **dadurch gekennzeichnet, dass** die röhrenförmige Spule (5) im Querschnitt ein vieleckiges äußeres Profil und ein gekrümmtes inneres Profil aufweist.

7. Verbundplatte (50) nach einem der vorhergehenden Ansprüche, **dadurch gekennzeichnet, dass** sie eine Isoliermatte (52) enthält, die mit der Seitenfläche der zumindest einen laminaren Stützstruktur (51) über Befestigungsmittel (53) gekoppelt ist und die geeignet ausgebildet ist, um nahe an der vorhandenen Referenzfläche (M) angeordnet zu werden.

8. Verbundplatte (50) nach Anspruch 7, **dadurch gekennzeichnet, dass** die Isoliermatte (52) eine Dicke von 3,5 mm aufweist und aus gefrästem und komprimierten Gummi hergestellt ist, das von Reifen recycelt wurde.

9. Verbundplatte (1) nach einem der vorhergehenden Ansprüche, **dadurch gekennzeichnet, dass** sie ein Verankerungsmittel (53) umfasst, das auf die zumindest eine Stützstruktur (2) angebracht ist, um sie fest an der Referenzfläche (M) zu sichern.

10. Verbundplatte (1) nach Anspruch 9), **dadurch gekennzeichnet, dass** das Verankerungsmittel eine Vielzahl von Dübeln enthält, die geeignet sind, um in die Referenzfläche (M) eingesteckt zu werden, eingefügt in Durchgangslöchern (8), die in verdickten Tafeln (9), die zu der zumindest einen Stützstruktur (2) gehören, eingearbeitet sind und die in einer mittleren Zone und/oder nahe der Umlaufkante (2a) der zumindest einen Stützstruktur (2) angeordnet sind.

11. Abdeckmodul zum Anbringen von Klimaanlagen von Gebäuderäumen, **dadurch gekennzeichnet, dass** es umfasst:
eine oder mehrere vorgefertigte Verbundplatten (1; 50) nach Anspruch 1;
zumindest eine Oberflächenbehandlung, die über der gesamte Seitenfläche der zumindest einen Stützstruktur (2; 51) aufgebracht ist.

12. Verfahren zur Ausstattung von Klimaanlagen von Gebäuderäumen, umfassend die folgenden Abläufe:
Anbringen an zumindest einem freien Bereich von zumindest einer bestehenden Referenzfläche (M) des Raumes einer oder mehrerer vorgefertigter Verbundplatten (1; 50), von denen jede enthält: zumindest eine laminare Stützstruktur (2; 51), die geeignet ausgebildet ist, um nahe an der zumindest einen bestehenden Referenzfläche (M) des Raumes angeordnet zu werden und zumindest ein hydraulisches Verteilungssystem (3; 56), das monolithisch mit der zumindest einen laminaren Stützstruktur (2; 51) ist, und geeignet ausgebildet ist, um mit einem Fluid-Verteilungsnetzwerk verbunden zu werden, um von dem Fluid durchlaufen zu werden und den Raum zu klimatisieren;
Verbinden des zumindest einem hydraulischen Verteilungssystems (3; 56) von jeder der vorgefertigten Verbundplatten (1; 50) mit dem Verteilungsnetzwerk des Fluids.

13. Verfahren nach Anspruch 12), **dadurch gekennzeichnet, dass** der Vorgang des Anbringens jeder der vorgefertigten Verbundplatten (1; 50) direkt in dem Raum stattfindet und in der Reihenfolge die folgenden Abläufe enthält:
Niederlegen jedes der vorgefertigten Verbundplatten (1; 50) auf dem freien Bereich der zumindest einen Referenzfläche (M);
Anordnen zumindest einer Oberflächenbehandlung auf jeder der vorgefertigten Verbundplatten (1; 50).

14. Verfahren nach Anspruch 13), **dadurch gekennzeichnet, dass** die Oberflächenbehandlung eine der Abdeckungen, ausgewählt aus der Gruppe bestehend aus Platten, laminar beschichtete Bleche, und Zementmörtelschichten umfasst.

15. Verfahren nach Anspruch 13) oder 14), **dadurch gekennzeichnet, dass** es den Vorgang umfasst, den Platz des Raumes, der durch den Vorgang des Anordnens der Oberflächenbehandlung beeinflusst wird, abzugrenzen, was vor dem Anordnen der Oberflächenbehandlung auf den vorgefertigten Verbundplatten (1; 50) durchgeführt wird.

## Revendications

1. Panneau composite préfabriqué (1 ; 50) pour la disposition d'installations de climatisation de pièces de bâtiments, comprenant au moins une structure de support laminaire (2 ; 51), appropriée pour être disposée à proximité d'une surface de référence existante (M) de ladite pièce, et au moins un système de distribution hydraulique (3 ; 56), **caractérisé en ce que** ledit système de distribution hydraulique au nombre d'au moins un (3 ; 56) est monolithique avec ladite structure de support laminaire au nombre d'au moins une (2 ; 51), approprié pour être relié à un réseau de distribution de fluide afin d'être traversé par ledit fluide et de climatiser ladite pièce.

2. Panneau (1 ; 50) selon la revendication 1, **caractérisé en ce que** ladite structure de support laminaire au nombre d'au moins une (2, 51) comprend un treillis d'ossature plat (4) constitué par des barres longitudinales entremêlées les unes avec les autres, dont chacune présente, en coupe transversale, un profil polygonal.

3. Panneau (1 ; 50) selon la revendication 1 ou 2, **caractérisé en ce que** ladite structure de support laminaire au nombre d'au moins une (2 ; 51) est réalisée en matière plastique de haute résistance mécanique.

4. Panneau (1 ; 50) selon la revendication 3, **caractérisé en ce que** ledit système de distribution hydraulique au nombre d'au moins un (3 ; 56) est réalisé en matière plastique et est intégré dans ladite structure de support laminaire au nombre d'au moins une (2 ; 51) par traitement industriel dudit corps unique monolithique résultant en matière plastique avec ladite structure de support laminaire au nombre d'au moins une (2 ; 51).

5. Panneau (1 ; 50) selon l'une quelconque des revendications précédentes, **caractérisé en ce que** ledit système de distribution hydraulique au nombre d'au moins un (3 ; 56) comprend un serpentin de chauffage tubulaire (5), distribué uniformément à l'intérieur de ladite structure de support laminaire au nombre d'au moins une (2 ; 51), un tuyau de délivrance (6) et un tuyau de retour (7) reliés à partir de côtés opposés audit serpentin tubulaire (5) et positionnés au voisinage du bord périphérique (2a) de ladite structure de support au nombre d'au moins une (2), appropriés pour être reliés hydrauliquement audit réseau de distribution de fluide au nombre d'au moins un.

6. Panneau (1 ; 50) selon la revendication 5, **caractérisé en ce que** ledit serpentin tubulaire (5) présente, en coupe transversale, un profil extérieur polygonal et un profil intérieur courbe.

7. Panneau (50) selon l'une quelconque des revendications précédentes, **caractérisé en ce qu'**il comprend un matelas d'isolation (52), couplé à la face latérale de ladite structure de support laminaire au nombre d'au moins une (51) par l'intermédiaire de moyens de fixation (53) et approprié pour être disposé à proximité de ladite surface de référence existante (M).

8. Panneau (50) selon la revendication 7, **caractérisé en ce que** ledit matelas d'isolation (52) présente une épaisseur de 3,5 mm et est réalisé en caoutchouc broyé et comprimé recyclé à partir de pneumatiques.

9. Panneau (1) selon l'une quelconque des revendications précédentes, **caractérisé en ce qu'**il comprend des moyens d'ancrage (53) appliqués à ladite structure de support au nombre d'au moins une (2) de façon à fixer fermement celle-ci à ladite surface de référence (M).

10. Panneau (1) selon la revendication 9, **caractérisé en ce que** lesdits moyens d'ancrage comprennent une pluralité de goupilles, appropriées pour être enfoncées dans ladite surface de référence (M), insérées dans des trous traversants (8) réalisés dans des plaques épaissies (9) appartenant à ladite structure de support au nombre d'au moins une (2) et disposées dans la zone centrale et/ou au voisinage du bord périphérique (2a) de ladite structure de support au nombre d'au moins une (2).

11. Module de revêtement pour la disposition d'installations de climatisation dans des pièces de bâtiments, **caractérisé en ce qu'**il comprend :
un ou plusieurs panneaux composites préfabriqués (1 ; 50) selon la revendication 1 ;
au moins un fini de surface appliqué sur la totalité de la face latérale de ladite structure de support au nombre d'au moins une (2 ; 51).

12. Procédé pour la disposition d'installations de climatisation de pièces de bâtiments, comprenant les opérations suivantes :
l'application à une zone libre d'au moins une surface de référence existante (M) de ladite pièce d'un ou de plusieurs panneaux composites préfabriqués (1 ; 50), dont chacun comprend au moins une structure de support laminaire (2 ; 51), appropriée de façon à être disposée à proximité de ladite surface de référence existante au nombre d'au moins une (M) de ladite pièce, et au moins un système de distribution hydraulique (3 ; 56), monolithique avec ladite structure de support laminaire au nombre d'au moins une (2 ; 51), approprié pour être relié à un réseau de distribution de fluide de façon à être traversé par ledit fluide et à climatiser ladite pièce ;
la liaison dudit système de distribution hydraulique au nombre d'au moins un (3 ; 56) de chacun desdits panneaux composites préfabriqués (1 ; 50) audit réseau de distribution dudit fluide.

13. Procédé selon la revendication 12, **caractérisé en ce que** ladite opération d'application de chacun desdits panneaux composites préfabriqués (1 ; 50) se produit directement dans ladite pièce, et comprenant, dans l'ordre, les opérations suivantes :
la pose de chacun desdits panneaux composites préfabriqués (1 ; 50) sur ladite zone libre de ladite surface de référence au nombre d'au moins une (M) ;
la disposition d'au moins un fini de surface sur chacun desdits panneaux composites préfabriqués (1 ; 50).

14. Procédé selon la revendication 13, **caractérisé en ce que** ledit fini de surface comprend l'un quelconque des revêtements choisis parmi le groupe comprenant des tuiles, des feuilles de revêtement laminaires, une couche de mortier de ciment.

15. Procédé selon la revendication 13 ou 14, **caractérisé en ce qu'**il comprend l'opération de délimitation de l'espace de ladite pièce affecté par ladite opération de disposition dudit fini de surface, effectuée avant la disposition dudit fini de surface sur lesdits panneaux composites préfabriqués (1 ; 50).
